(19) Europäisches Patentamt
European Patent Office
Office européen des brevets

(11) **EP 2 370 796 B1**

(12) **EUROPÄISCHE PATENTSCHRIFT**

(45) Veröffentlichungstag und Bekanntmachung des Hinweises auf die Patenterteilung:
**19.07.2017 Patentblatt 2017/29**

(21) Anmeldenummer: **09744128.1**

(22) Anmeldetag: **27.10.2009**

(51) Int Cl.:
**G01F 23/26** (2006.01)

(86) Internationale Anmeldenummer:
**PCT/EP2009/064114**

(87) Internationale Veröffentlichungsnummer:
**WO 2010/063516 (10.06.2010 Gazette 2010/23)**

(54) **FÜLLSTANDSSENSOR UND VERFAHREN ZUR HERSTELLUNG DES FÜLLSTANDSSENSORS**

FILLING LEVEL SENSOR AND METHOD FOR PRODUCING THE FILLING LEVEL SENSOR

DÉTECTEUR DE NIVEAU ET SON PROCÉDÉ DE PRODUCTION

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **01.12.2008 DE 102008044232**

(43) Veröffentlichungstag der Anmeldung:
**05.10.2011 Patentblatt 2011/40**

(73) Patentinhaber: **Robert Bosch GmbH**
**70442 Stuttgart (DE)**

(72) Erfinder:
• **ZATOPKOVA, Kamila**
**37001 Ceske Budejovice (CZ)**
• **KRYSTOF, Martin**
**37011 Ceske Budejovice (CZ)**
• **GAIDARUS, Bedrich**
**37316 Dobva Voda u C.B. (CZ)**

(56) Entgegenhaltungen:
**WO-A-2004/109269  WO-A-2007/145757**
**DE-A1- 10 162 269**

## Beschreibung

Stand der Technik

Die Erfindung geht aus von einem Füllstandssensor nach der Gattung des Hauptanspruchs.

Es ist schon ein Füllstandssensor aus der DE 101 62 269 A1 bekannt, mit im wesentlichen parallel verlaufenden elektrischen Leitern, die als metallische Stäbe oder Drähte ausgebildet sind und in einem thermoplastischen Kunststoffkörper eingebettet sind. Nachteilig ist, dass die elektrischen Leiter in dem Kunststoffkörper nicht hinreichend genau positioniert werden können. Dadurch ist die Messempfindlichkeit bzw -genauigkeit nicht ausreichend. Zur Überwindung dieses Mangels wären im geometrischen Teileaufbau noch dünnwandigere Überspritzungen der Leiter erforderlich, was bei der Formfüllung unrealistisch hohe Fülldrücke erfordert und extreme Anfälligkeiten bei der Leiterzentrierung entstehen. Zentriereinrichtungen im Spritzgießwerkzeug - z.B. auch während des Füllvorganges rückziehbare - scheiden bei einer Anwendung des Füllstandssensors in chemisch sehr aggressiven Medien aus; diese würden im Bereich der entstehenden Bindenähte undicht.

Ein weiterer Füllstandssensor mit im wesentlichen parallel verlaufenden elektrischen Leitern, die in einem thermoplastischen Kunststoffkörper eingebettet sind, ist aus WO 2007/145757 A1 bekannt.

Vorteile der Erfindung

Der erfindungsgemäße Füllstandssensor mit den kennzeichnenden Merkmalen des Hauptanspruchs hat demgegenüber den Vorteil, dass die elektrischen Leiter wesentlich genauer im Kunststoffkörper positioniert werden, indem der Kunststoffkörper aus mehreren axialen Spritzgussabschnitten des gleichen Kunststoffs gebildet ist, die stoffschlüssig und formschlüssig miteinander verbunden sind. Nach der Vormontage der elektrischen Leiter in einem Spritzgießwerkzeug werden die axialen Spritzgussabschnitte derart gespritzt, dass diese form- und stoffschlüssig miteinander verbunden sind. Die erforderliche Beständigkeit der stoffschlüssigen Verbindungsstellen erfordert üblicherweise im schmelzflüssigen Zustand miteinander verbindbare, thermoplastische Kunststoffe.

Aufgrund der kürzeren axialen Füllstrecke wird eine Verschiebung oder Deformation der elektrischen Leiter durch den Schmelzfluss beim Formfüllvorgang vermieden. Außerdem wird durch die verkürzten Formfüllstrecken ein effektiver Stoffschluss erreicht. Die axialen Spritzgussabschnitte werden beispielsweise durch Queranspritzungen hergestellt. Durch die dichte Vollummantelung der elektrischen Leiter mit Kunststoff ist auch ein Kriechen aggressiver Medien entlang der Leiter hin zu empfindlichen elektronischen Bauteilen unterbunden.

Die elektrischen Leiter sind durch die Ummantelung innerhalb des Kunststoffkörpers vor Korrosion geschützt.

Durch die in den Unteransprüchen aufgeführten Maßnahmen sind vorteilhafte Weiterbildungen und Verbesserungen des im Hauptanspruch angegebenen Füllstandssensors möglich.

Besonders vorteilhaft ist, wenn die axialen Spritzgussabschnitte durch zumindest einen Vorspritzabschnitt und zumindest zwei Nachspritzabschnitte gebildet sind, wobei die Nachspritzabschnitte an den zumindest einen erstarrten Vorspritzabschnitt angespritzt sind. Auf diese Weise wird erreicht, dass die elektrischen Leiter während des Spritzgießens durch die Schmelze nicht deformiert bzw. verschoben werden, sondern sicher in ihrer Position fixiert sind. Dabei können ein Vorspritzabschnitt und ein Nachspritzabschnitt jeweils in axialer Richtung abwechselnd hintereinander angeordnet sein. Zur Erreichung einer mediendichten Verbindung zwischen den einzelnen Abschnitten reicht üblicherweise ein reiner Formschluss der Materialien untereinander nicht aus. Durch Kriechen der Thermoplaste über die Lebensdauer des Füllstandssensors würden Undichtigkeiten zwischen den Abschnitten entstehen. Ähnliches ist zu erwarten bei Verklebung der Teile untereinander.

Weiterhin vorteilhaft ist, wenn der Vorspritzabschnitt an seinen Enden einen Verbindungsbereich zur Verbindung mit dem Nachspritzabschnitt aufweist. Dieser umfasst zumindest eine ringförmige Anschmelzschulter und zumindest eine Hinterschneidung, wobei die Anschmelzschulter an ihrer Spitze während des Überstömens des noch schmelzflüssigen Kunststoffes anschmilzt und dadurch eine stoffschlüssige, mediendichte Verbindung zwischen dem Vorspritzabschnitt und dem Nachspritzabschnitt hergestellt wird.

Sehr vorteilhaft ist es, wenn der Verbindungsbereich des Vorspritzabschnitts gegenüber dem übrigen Vorspritzabschnitt in Richtung quer zur Längserstreckung der elektrischen Leiter zurückversetzt ist, da auf diese Weise ein bündiges Überlappen des Vorspritzabschnitts mit dem Nachspritzabschnitt und damit eine gute Verbindung zwischen dem Vorspritzabschnitt und dem Nachspritzabschnitt ermöglicht wird.

Auch vorteilhaft ist, wenn die ringförmige Anschmelzschulter auf ihrer Schmelzflussanströmseite eine Schräge aufweist, da auf diese Weise ein prozesssicheres und reproduzierbares Anschmelzen der Anschmelzschulter beim Überströmen durch die Schmelze des Nachspritzabschnitts und damit eine stoffschlüssige und dichte Verbindung zwischen dem Vorspritzabschnitt und dem Nachspritzabschnitt erreicht wird.

Desweiteren vorteilhaft ist, wenn zumindest ein Abstandshalter in einem Vorspritzabschnitt und/oder Nachspritzabschnitt eingebettet ist, der einen vorbestimmten Abstand zwischen zumindest zwei elektrischen Leitern einstellt. Auf diese Weise werden die elektrischen Leiter in einer vorbestimmten Position vorfixiert, so dass deren Position nach dem Umspritzen mit hoher Genauigkeit und reproduzierbar eingehalten werden kann.

Nach dem Ausführungsbeispiel sind die elektrischen Leiter metallische Elektroden und/oder elektrische Kabel mit oder ohne isolierender Umhüllung.

Zeichnung

Ein Ausführungsbeispiel der Erfindung ist in der Zeichnung vereinfacht dargestellt und in der nachfolgenden Beschreibung näher erläutert.

Fig.1   zeigt eine dreidimensionale Ansicht eines Füllstandssensors, bei dem die Erfindung angewendet werden kann,

Fig.2   eine Schnittansicht des Füllstandssensors entlang der Linie II-II in Fig.1,

Fig.3   eine dreidimensionale Ansicht eines Vorspritzabschnitts des erfindungsgemäßen Füllstandssensors nach Fig.1,

Fig.4   eine Teilansicht des Vorspritzabschnitts nach Fig.3 und

Fig.5   eine Teilansicht der im Spritzwerkzeug eingespannten elektrischen Leiter mit dem daran angespritzten Vorspritzabschnitt und mit zwischen den Leitern vorgesehenen Abstandshaltern.

Beschreibung des Ausführungsbeispiels

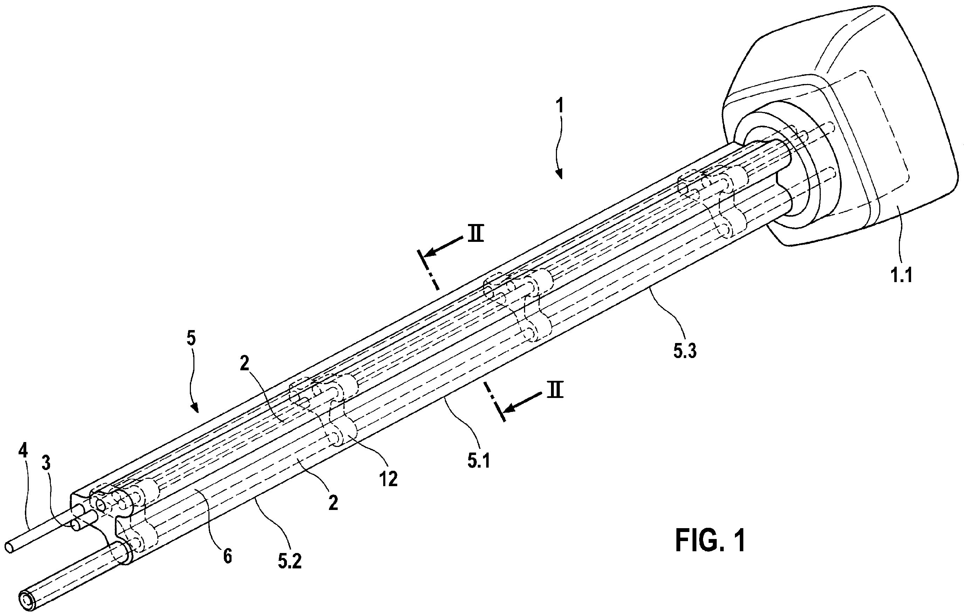

Fig.1 zeigt eine dreidimensionale Ansicht eines Füllstandssensors, bei dem die Erfindung angewendet werden kann.

Der Füllstandssensor nach Fig. 1 dient dazu, einen Füllstand einer elektrisch leitenden Flüssigkeit, beispielsweise einer wässrigen Harnstofflösung, in einem Behälter zu messen. Darüber hinaus kann der Füllstandssensor z.B. ein Thermoelement beinhalten, das zur Regelung der Flüssigkeitstemperatur - genauer zur Ansteuerung eines Heizelementes gegen das Einfrieren der Flüssigkeit - erforderlich ist.

Der Füllstandssensor 1 funktioniert nach dem kapazitiven Messprinzip und hat zwei mit Kunststoff umspritzte Messelektroden 2, die in die Flüssigkeit eintauchen. Das elektrische Feld entlang der Messelektoden 2 wird entsprechend der Benetzungslänge der Flüssigkeit gegenüber dem unbenetzten Bereich verändert. In einem elektronischen Auswertesystem wird diese Differenz in ein entsprechendes elektrisches Ausgangssignal umgesetzt. Hierzu wird eine Spannung, beispielsweise eine Dreiecksspannung, zwischen den Messelektroden 2 angelegt. Die Füllstandsmessung erfolgt kontinuierlich über die Längsausrichtung der Messelektroden 2.

$$[C=Q/U= \varepsilon * A/d]$$

Des weiteren kann eine Referenzelektrode 3 vorgesehen sein. Durch die Messung der elektrischen Kapazität zwischen einer der Messelektroden 2 und der Referenzelektrode 3 wird die Permittivität $\varepsilon$ der Flüssigkeit bestimmt.

Außerdem kann der Füllstandssensor 1 zwei Elektroden bzw. - vorzugsweise ummantelte - Kabel 4 zur Temperaturmessung aufweisen.

Die Messelektroden 2, die Referenzelektrode 3 und die Elektroden 4 zur Temperaturmessung sind elektrische Leiter und beispielsweise stabförmig, stiftförmig oder zylinderförmig ausgeführt.

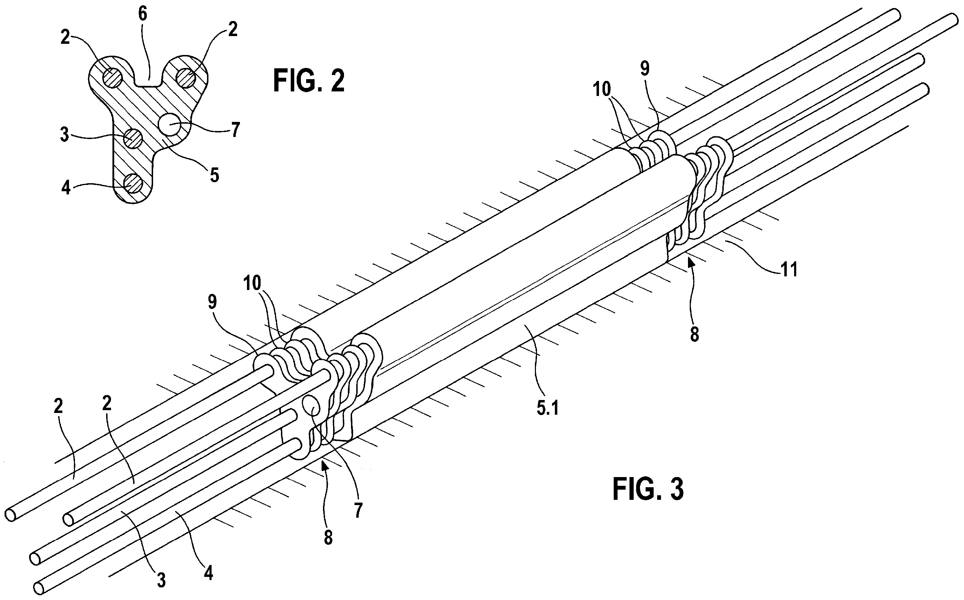

Fig.2 zeigt eine Schnittansicht des Füllstandssensors entlang der Linie II-II in Fig.1. Bei der Ansicht nach Fig.2 sind die gegenüber der Ansicht nach Fig.1 gleichbleibenden oder gleichwirkenden Teile durch die gleichen Bezugszeichen gekennzeichnet.

Zumindest die Messelektroden 2 und beispielsweise auch die Referenzelektrode 3 und die Elektroden 4 zur Temperaturmessung sind in einem thermoplastischen Kunststoffkörper 5 des Füllstandssensors 1 eingebettet, um die Elektroden vor Korrosion durch die Flüssigkeit zu schützen. Der Kunststoffkörper 5 wird durch Umspritzen der Elektroden 2,3,4 mittels Spritzgussverfahren hergestellt. In dem Kunststoffkörper 5 ist ein Durchgangskanal 7 ausgeführt, um ein Koaxialkabel für die Temperaturmessung durchzuführen.

Die beiden Elektroden 2 und die Referenzelektrode 3 ragen an ihrem einen Ende in axialer Richtung aus dem Kunststoffkörper 5 heraus, weil es notwendig ist, das kapazitive Messprinzip mittels einer Flüssigkeits-Qualitätsauswertung zu garantieren.
An ihrem anderen Ende sind die Elektroden 2,3,4 mit einer Elektronik elektrisch verbunden, die in einem Sensorgehäuse 1.1 untergebracht ist. Das Sensorgehäuse 1.1 ist mit dem Kunststoffkörper 5 mechanisch dicht verbunden, beispielsweise stoffschlüssig.

Der Kunststoffkörper 5 hat keine Aussparungen bzw. Fenster wie im Stand der Technik, sondern schließt die Elektroden 2,3,4 bis auf die herausragenden Abschnitte dicht ein.

Die beiden Messelektroden 2 sind derart umspritzt, dass zwischen den beiden Messelektroden 2 eine Einbuchtung 6 gebildet ist, in der abhängig vom Füllstand im Behälter die Flüssigkeit vorliegt und die Kapazität zwischen den beiden Messelektroden beeinflusst.

Die Elektroden 2,3,4 müssen im fertigen Kunststoffkörper 5 im wesentlichen parallel zueinander angeordnet sein, um die erforderliche Messgenauigkeit zu erreichen. Daher ist sicherzustellen, dass die Position der Elektroden 2,3,4 beim Umspritzen mit Kunststoffschmelze nicht durch die Schmelze verändert wird.

Erfindungsgemäß ist deshalb vorgesehen, dass der Kunststoffkörper 5 aus mehreren axialen Spritzgussabschnitten 5.1,5.2,5.3 gebildet ist, die stoffschlüssig und/oder formschlüssig, vorzugsweise stoffschlüssig und formschlüssig, miteinander verbunden sind. Dadurch muss die Schmelze in engen Fließquerschnitten nur über eine kürzere Strecke fließen. Dagegen wird der Kunststoffkörper 5 im Stand der Technik auf einem längeren Füllweg in einem Stück gespritzt.

Gemäß dem Ausführungsbeispiel sind die axialen Spritzgussabschnitte 5.1,5.2,5.3 durch einen Vorspritzabschnitt 5.1 und zwei Nachspritzabschnitte 5.2,5.3 gebildet, wobei die Nachspritzabschnitte 5.2,5.3 an den einen erstarrten Vorspritzabschnitt 5.1 angespritzt sind. Dabei sind der Vorspritzabschnitt 5.1 und der Nachspritzabschnitt 5.2,5.3 jeweils abwechselnd in axialer Richtung bezüglich der Längserstreckung der Elektroden 2,3,4 hintereinander angeordnet. Selbstverständlich können auch zwei oder mehr Vorspritzabschnitte 5.1 vorgesehen sein, die beabstandet zueinander sind, wobei jeweils ein Nachspritzabschnitt 5.2,5.3 in den Lücken zwischen den Vorspritzabschnitten 5.1 angeordnet ist. Durch den zumindest einen Vorspritzabschnitt 5.1 wird eine Deformation der Elektroden 2,3,4 durch den Schmelzfluss verhindert und deren Position auf diese Weise fixiert.

Fig.3 zeigt eine dreidimensionale Ansicht des Vorspritzabschnitts nach Fig.1. Bei der Ansicht nach Fig.3 sind die gegenüber der Ansicht nach Fig.1 und Fig.2 gleichbleibenden oder gleichwirkenden Teile durch die gleichen Bezugszeichen gekennzeichnet.

Um eine flüssigkeitsdichte Verbindung zwischen den axialen Spritzgussabschnitten 5.1,5.2,5.3 zu erreichen, hat der Vorspritzabschnitt 5.1 an seinen Enden jeweils einen Verbindungsbereich 8, der zumindest eine ringförmige Anschmelzschulter 9 und zumindest eine Hinterschneidung 10 umfasst. Die ringförmige Anschmelzschulter 9 ist in Schmelzflussrichtung gesehen vor der zumindest einen Hinterschneidung 10 angeordnet. Die zumindest eine Hinterschneidung 10 ist beispielsweise als umlaufender Bund oder Ringabsatz ausgebildet, kann aber auch beliebig anders ausgeführt sein.

Die Elektroden 2,3,4 sind in einem Spritzwerkzeug 11 aufgespannt und werden in mehreren Schritten unter Bildung zumindest eines Vorspritzabschnitts 5.1 und anschließend unter Bildung der Nachspritzabschnitte 5.2,5.3 dünnwandig umspritzt. Die Wanddicke der Umspritzung liegt beispielsweise im Bereich von einem Millimeter.

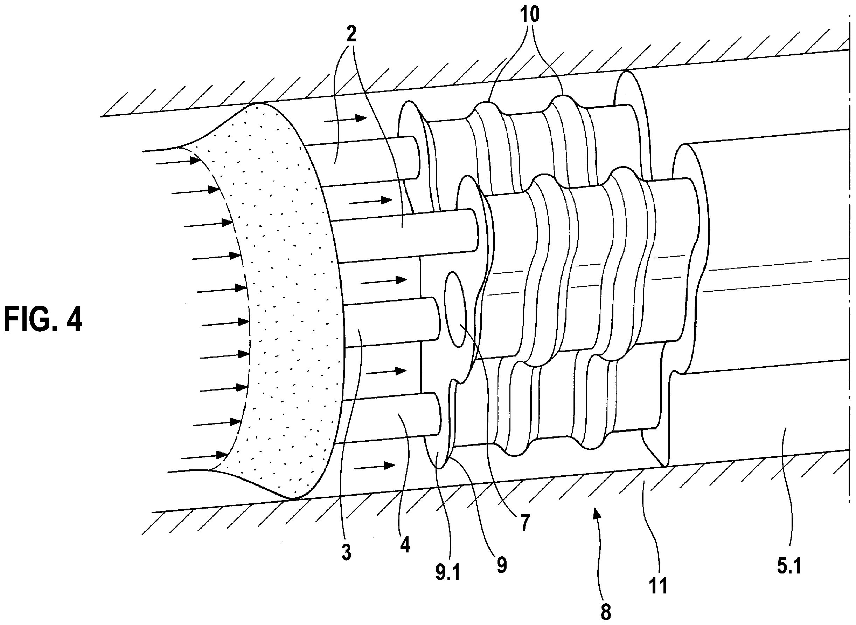

Fig.4 zeigt eine Teilansicht des Vorspritzabschnitts nach Fig.3.

Der Verbindungsbereich 8 des Vorspritzabschnitts 5.1 ist gegenüber dem übrigen Vorspritzabschnitt 5.1 quer zur Längserstreckung der elektrischen Leiter 2,3,4 zurückversetzt, so dass die Schmelze des Nachspritzabschnitts 5.2,5.3 den Verbindungsbereich 8 des Vorspritzabschnitts 5.1 überströmen und sich mit diesem stoffschlüssig verbinden kann. Auf diese Weise können die Nachspritzabschnitte 5.2,5.3 die gleichen Abmessungen quer zur Längserstreckung haben wie der Vorspritzabschnitt 5.1, so dass beide bündig aneinander anschließen.

Die ringförmige Anschmelzschulter 9 hat auf ihrer Schmelzflussanströmseite eine Stirnfläche 9.1, die mittels einer Schräge angeschrägt sein kann, um im Schmelzefluss "tote" Strömungsecken zu verhindern. Die Geometrie der Anschmelzschulter 9 ist so ausgeführt, dass die Schmelze nur kleine Bereiche - diese aber sicher über den gesamten rinförmigen Umfang - anschmilzt.

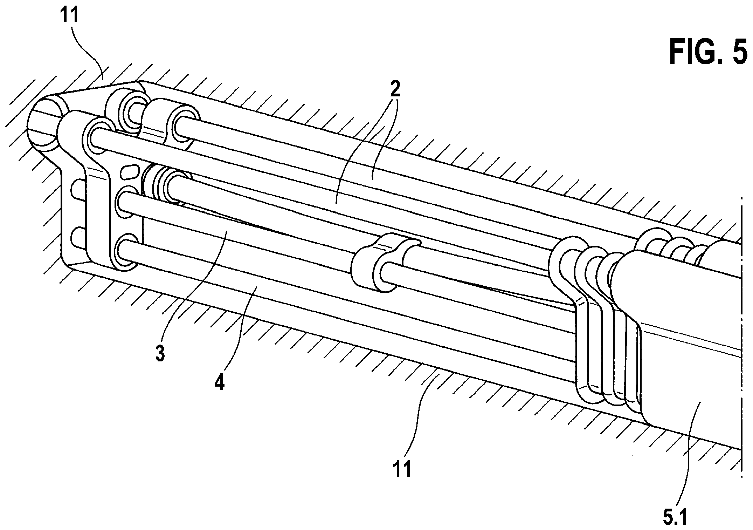

Fig.5 zeigt eine Teilansicht der in einem Spritzwerkzeug eingespannten elektrischen Leiter mit dem daran angespritzten Vorspritzabschnitt und mit zwischen den Leitern vorgesehenen Abstandshaltern.
Bei der Vorrichtung nach Fig.5 sind die gegenüber der Vorrichtung nach Fig.1 bis Fig.4 gleichbleibenden oder gleichwirkenden Teile durch die gleichen Bezugszeichen gekennzeichnet.

In dem Vorspritzabschnitt 5.1 und/oder einem der Nachspritzabschnitte 5.2,5.3 kann zumindest ein Abstandshalter 12 eingebettet sein, der einen vorbestimmten Abstand zwischen zumindest zwei Elektroden 2,3,4 einstellt und diesen während der Umströmungsphase aufrecht erhält. Beispielsweise bestehen diese Abstandshalter 12 aus einem dem Umhüllungsstoff ähnlichen thermoplastischen Kunststoff und sind auf die Elektroden 2,3,4 aufgefädelt.

**Patentansprüche**

1. Füllstandssensor mit im wesentlichen parallel verlaufenden elektrischen Leitern, die in einem thermoplastischen Kunststoffkörper des Füllstandssensors eingebettet sind, **dadurch gekennzeichnet, dass** der Kunststoffkörper (5) aus mehreren axialen Spritzgussabschnitten (5.1,5.2,5.3) gebildet ist, die stoffschlüssig und formschlüssig miteinander verbunden sind, wobei die axialen Spritzgussabschnitte (5.1,5.2,5.3) durch zumindest einen Vorspritzabschnitt (5.1) und zumindest zwei Nachspritzabschnitte (5.2,5.3) gebildet sind, und wobei die Nachspritzabschnitte (5.2,5.3) an den zumindest einen erstarrten Vorspritzabschnitt (5.1) angespritzt sind.

2. Füllstandssensor nach Anspruch 1, **dadurch gekennzeichnet, dass** der Vorspritzabschnitt (5.1) und der Nachspritzabschnitt (5.2,5.3) jeweils abwechselnd in axialer Richtung hintereinander angeordnet sind.

3. Füllstandssensor nach Anspruch 1, **dadurch gekennzeichnet, dass** der Vorspritzabschnitt (5.1) an seinen Enden jeweils einen Verbindungsbereich (8) zur Verbindung mit dem Nachspritzabschnitt (5.2,5.3) aufweist, der zumindest eine ringförmige Anschmelzschulter (9) und zumindest eine Hinterschneidung (10) umfasst.

4. Füllstandssensor nach Anspruch 3, **dadurch gekennzeichnet, dass** der Verbindungsbereich (8) des Vorspritzabschnitts (5.1) gegenüber dem übrigen Vorspritzabschnitt (5.1) quer zur Längserstreckung der elektrischen Leiter (2,3,4) zurückversetzt ist.

**5.** Füllstandssensor nach Anspruch 3, **dadurch gekennzeichnet, dass** die ringförmige Anschmelzschulter (9) auf ihrer Schmelzflussanströmseite eine Schräge aufweist.

**6.** Füllstandssensor nach Anspruch 1, **dadurch gekennzeichnet, dass** zumindest ein Abstandshalter (12) in einem Vorspritzabschnitt (5.1) und/oder Nachspritzabschnitt (5.2,5.3) eingebettet ist, der einen vorbestimmten Abstand zwischen zumindest zwei elektrischen Leitern (2,3,4) einstellt.

**7.** Füllstandssensor nach Anspruch 1, **dadurch gekennzeichnet, dass** die elektrischen Leiter (2,3,4) Elektroden und/oder elektrische Kabel sind.

**8.** Verfahren zur Herstellung eines Füllstandssensors in einem Spritzwerkzeug, bei dem elektrische Leiter in dem Spritzwerkzeug im wesentlichen parallel zueinander verlaufend positioniert oder aufgespannt und anschließend umspritzt werden, **dadurch gekennzeichnet, dass** an die elektrischen Leiter (2,3,4) zumindest ein Vorspritzabschnitt (5.1) angespritzt und anschließend die noch nicht umspritzten axialen Teilbereiche unter Bildung von Nachspritzabschnitten (5.2,5.3) umspritzt werden.

**Claims**

**1.** Filling level sensor with electrical conductors which run substantially parallel and are embedded in a thermoplastic plastic body of the filling level sensor, **characterized in that** the plastic body (5) is formed from a plurality of axial injection-moulded portions (5.1, 5.2, 5.3), which are connected to one another in a material-bonding and interlocking manner, the axial injection-moulded portions (5.1, 5.2, 5.3) being formed by at least one preliminarily-injection-moulded portion (5.1) and at least two subsequently-injection-moulded portions (5.2, 5.3), and the subsequently-injection-moulded portions (5.2, 5.3) being injection-moulded onto the at least one solidified preliminarily-injection-moulded portion (5.1).

**2.** Filling level sensor according to Claim 1, **characterized in that** the preliminarily-injection-moulded portion (5.1) and the subsequently-injection-moulded portion (5.2, 5.3) are respectively arranged alternately one behind the other in the axial direction.

**3.** Filling level sensor according to Claim 1, **characterized in that** the preliminarily-injection-moulded portion (5.1) has at each of its ends a connecting region (8) for the connection to the subsequently-injection-moulded portion (5.2, 5.3), which region comprises at least one annular initial-melting shoulder (9) and at least one undercut (10).

**4.** Filling level sensor according to Claim 3, **characterized in that** the connecting region (8) of the preliminarily-injection-moulded portion (5.1) is set back from the rest of the preliminarily-injection-moulded portion (5.1) transversely to the longitudinal extent of the electrical conductors (2, 3, 4).

**5.** Filling level sensor according to Claim 3, **characterized in that** the annular initial-melting shoulder (9) has a slope on its molten-flow-accepting side.

**6.** Filling level sensor according to Claim 1, **characterized in that** at least one spacer (12) that sets a predetermined distance between at least two electrical conductors (2, 3, 4) is embedded in a preliminarily-injection-moulded portion (5.1) and/or subsequently-injection-moulded portion (5.2, 5.3).

**7.** Filling level sensor according to Claim 1, **characterized in that** the electrical conductors (2, 3, 4) are electrodes and/or electrical cables.

**8.** Method for producing a filling level sensor in an injection mould, in which electrical conductors are positioned or laid out in the injection mould in a manner running substantially parallel to one another and are subsequently encapsulated by injection moulding, **characterized in that** at least one preliminarily-injection-moulded portion (5.1) is injection-moulded onto the electrical conductors (2, 3, 4) and subsequently the not yet encapsulated axial subregions are encapsulated by injection moulding, thereby forming subsequently-injection-moulded portions (5.2, 5.3).

**Revendications**

**1.** Détecteur de niveau comprenant des conducteurs électriques qui s'étendent sensiblement en parallèle, lesquels sont enrobés dans un corps en matière thermoplastique du détecteur de niveau, **caractérisé en ce que** le corps en matière plastique (5) est constitué de plusieurs portions moulées par injection (5.1, 5.2, 5.3) axiales qui sont reliées entre elles par fusion des matières et par complémentarité des formes, les portions moulées par injection (5.1, 5.2, 5.3) axiales étant formées par au moins une portion pré-injectée (5.1) et au moins deux portions post-injectées (5.2, 5.3), et les portions post-injectées (5.2, 5.3) étant injectées sur l'au moins une portion pré-injectée (5.1) solidifiée.

**2.** Détecteur de niveau selon la revendication 1, **caractérisé en ce que** la portion pré-injectée (5.1) et la portion post-injectée (5.2, 5.3) sont respectivement disposées l'une derrière l'autre en alternance dans le sens axial.

3. Détecteur de niveau selon la revendication 1, **caractérisé en ce que** la portion pré-injectée (5.1) possède respectivement à ses extrémités une zone de liaison (8) destinée à la liaison avec la portion post-injectée (5.2, 5.3), laquelle comprend au moins un épaulement de fusion (9) de forme annulaire et au moins une contre-dépouille (10).

4. Détecteur de niveau selon la revendication 3, **caractérisé en ce que** la zone de liaison (8) de la portion pré-injectée (5.1) est en retrait par rapport au reste de la portion pré-injectée (5.1) transversalement à la projection longitudinale des conducteurs électriques (2, 3, 4).

5. Détecteur de niveau selon la revendication 3, **caractérisé en ce que** l'épaulement de fusion (9) de forme annulaire possède un biseau sur son côté d'arrivée du flux de masse fondue.

6. Détecteur de niveau selon la revendication 1, **caractérisé en ce qu'**au moins une entretoise (12) est enrobée dans une portion pré-injectée (5.1) et/ou une portion post-injectée (5.2, 5.3), laquelle fixe un écart prédéfini entre au moins deux conducteurs électriques (2, 3, 4).

7. Détecteur de niveau selon la revendication 1, **caractérisé en ce que** les conducteurs électriques (2, 3, 4) sont des électrodes et/ou des câbles électriques.

8. Procédé de fabrication d'un détecteur de niveau dans un outil d'injection, selon lequel des conducteurs électriques sont positionnés, ou sont tendus et ensuite surmoulés dans l'outil d'injection de manière à s'étendre sensiblement en parallèle les uns des autres, **caractérisé en ce qu'**au moins une portion pré-injectée (5.1) est injectée sur les conducteurs électriques (2, 3, 4) et ensuite les zones partielles axiales qui ne sont pas encore surmoulées sont surmoulées en formant des portions post-injectées (5.2, 5.3).

FIG. 1

FIG. 2

FIG. 3

EP 2 370 796 B1

FIG. 4

FIG. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10162269 A1
- WO 2007145757 A1